# EUROPÄISCHE PATENTANMELDUNG

(11) **EP 1 630 074 A1**
(43) Veröffentlichungstag der Anmeldung: **01.03.2006**
(21) Anmeldenummer: 05017091.9
(22) Anmeldetag: 05.08.2005
(51) Int. Cl.: B62D 21/17, B62D 25/20, B60R 16/02, F16L 3/22

(54) **Vorrichtung zur Befestigung von Leitungen**

(30) Priorität: 27.08.2004 DE 102004041431
(71) Anmelder: DaimlerChrysler AG, 70567 Stuttgart (DE)
(72) Erfinder: Cornwell, Anthony, 71083 Herrenberg (DE); Eissler, Holger, 71088 Holzgerlingen (DE); Felber, Gerd, 71069 Sindelfingen (DE); Köhler, Achim, 71229 Leonberg (DE)

(57) **Zusammenfassung**

Die Erfindung bezieht sich auf eine Vorrichtung 1 zur Befestigung von Leitungen und/oder Rohrleitungen, Kabeln, Kabelschläuchen und/oder kleinen Komponenten 2, die mit Hilfe mindestens einer Abdeckplatte 3 an der Unterseite 5 eines Kraftfahrzeugs befestigt ist. Zweck der Erfindung ist es, die Vorrichtung 1 zur Befestigung von Rohrleitungen bzw. Kabeln 2 derart auszubilden und anzuordnen, dass Befestigungselemente eingespart werden können.

Dies wird dadurch erreicht, dass zwischen der Unterseite 5 des Kraftfahrzeugs und der Abdeckplatte 3 mindestens eine Halterung 4 zur Aufnahme der Rohrleitungen, Kabel, Kabelschläuche und/oder kleinen Komponenten 2 an einem Karosserieteil 7 eines Kraftfahrzeugs angeschlossen ist, wobei die Abdeckplatte 3 und die Halterung 4 mit Hilfe eines Befestigungselements am Karosserieteil 7 angebracht sind.

## Beschreibung

Die Erfindung betrifft eine Vorrichtung zur Befestigung von Leitungen und/oder Rohrleitungen, Kabeln, Kabelschläuchen und/oder kleinen Komponenten, die mit Hilfe mindestens einer Abdeckplatte an der Unterseite eines Kraftfahrzeugs befestigt ist.

Es ist bereits eine Abdeckplatte in Form einer Trägerplatte bekannt (DE 101 32 969 A1), die am Unterboden eines Kraftfahrzeuges befestigbar ist und mindestens eine an dem Unterboden anzuordnende Komponente und/oder eine Komponentengruppe aufweist. Hierdurch soll eine rationelle Lösung und kostengünstige Montage von am Unterboden eines Kraftfahrzeugs anzuordnenden Komponenten geschaffen werden. Dazu sind auf oder an der als Träger- und Vormontageplatte ausgestalteten Abdeckplatte und/oder in diese integriert mehrere am Unterboden des Kraftfahrzeuges anzuordnende Komponenten und/oder Komponentengruppen angeordnet. Die Komponenten und/oder Komponentengruppen sind über zahlreiche einzelne Befestigungselemente auf der Abdeckplatte befestigt. Die Abdeckplatte ist ebenfalls mit den Komponenten und/oder Komponentengruppen über zahlreiche Befestigungselemente an dem Unterboden befestigbar. Die Montage ist daher sehr zeitaufwendig.

Der Erfindung liegt die Aufgabe zugrunde, die Vorrichtung zur Befestigung von Rohrleitungen bzw. Kabeln derart auszubilden und anzuordnen, dass mit möglichst wenigen Befestigungselementen ausgekommen werden kann.

Gelöst wird die Aufgabe erfindungsgemäß dadurch, dass zwischen der Unterseite des Kraftfahrzeugs und der Abdeckplatte mindestens eine Halterung zur Aufnahme der Rohrleitungen, Kabel, Kabelschläuche und/oder kleinen Komponenten an einem Karosserieteil eines Kraftfahrzeugs angeschlossen ist, wobei die Abdeckplatte und die Halterung mit Hilfe eines Befestigungselements am Karosserieteil angebracht ist. Hierdurch wird erreicht, dass auf einfache Weise und in kurzer Zeit mit Hilfe der Abdeckplatte die Halterung mit einem einzigen Verbindungselement an das Karosserieteil des Fahrzeugs angeschlossen werden kann. Ferner kann auf Sicherungsbügel für die Rohrleitungen im Bereich der Abdeckplatte verzichtet werden, da die Abdeckplatte einen ausreichenden Schutz für die Rohrleitungen, Kabel, Kabelschläuche und/oder kleinen Komponenten bietet. Die Abdeckplatte kann auch eine Unterbodenverkleidung sein.

Hierzu ist es vorteilhaft, dass an der Unterseite des Kraftfahrzeugs eine oder mehrere Halterungen vorgesehen sind, die mit Hilfe der Abdeckplatte abgedeckt sind. Hierdurch werden die Rohrleitungen bzw. Kabel vor Verschmutzung und Beschädigungen geschützt.

Eine zusätzliche Möglichkeit ist gemäß einer Weiterbildung der Erfindung, dass die Abdeckplatte und die Halterung mit Hilfe eines einzigen Verbindungselements gemeinsam an einem Karosserieteil des Kraftfahrzeugs befestigbar sind. Da Abdeckplatte und Halterung über ein einziges Verbindungselement an dem Karosserieteil befestigt werden können, werden Befestigungselemente eingespart und die Montagezeit verkürzt.

Ferner ist es vorteilhaft, dass die Halterung der Außenkontur einer im Karosserieteil vorgesehenen Aussparung angepasst ist. Hierdurch kann die Halterung platzsparend am Karosserieteil untergebracht werden.

Vorteilhaft ist es hierzu auch, dass die Abdeckplatte die gesamte die Halterung aufnehmende Aussparung abdeckt, so dass keine Teile hervorstehen.

Gemäß einer bevorzugten Ausführungsform der erfindungsgemäßen Lösung ist schließlich vorgesehen, dass in der Halterung eine oder mehrere die Rohrleitungen aufnehmende flexibel ausgebildete Festklemmelemente vorgesehen sind, die zur Aufnahme der Rohrleitung bzw. des Kabels nach einer Seite hin offen sind. Die Festklemmelemente vermeiden, dass Körperschall auf die Karosserieteile übertragen wird und eignen sich zur schnellen und einfachen Montage der Rohrleitung bzw. der Kabel oder anderer Teile.

Von besonderer Bedeutung ist für die vorliegende Erfindung, dass die Festklemmelemente aus einem kreisbogenförmigen Segment bestehen, das über eine oder mehrere Stege derart in der in der Halterung vorgesehenen Aussparung aufgenommen ist, dass zwischen dem Außenumfang des Segments und der Halterung ein Luftspalt gebildet wird. Die kreisbogenförmigen Segmente erleichtern das Einklipsen der Rohrleitung bzw. der Kabel oder Schläuche in die Halterungen.

Im Zusammenhang mit der erfindungsgemäßen Ausbildung und Anordnung ist es von Vorteil, dass das Segment an seiner Innenseite eine oder mehrere Abstandsstege aufweist, gegen die die Außenseite der Rohrleitungen oder des Kabels anlegbar ist. Auch hierdurch wird die Übertragung des Körperschalls auf das Kraftfahrzeug vermieden.

Vorteilhaft ist es ferner, dass die Halterung ein rechtes und linkes Tragteil mit einem Verbindungssteg aufweist, wobei zwischen den beiden Tragteilen das Verbindungselement zum Anschluss der Abdeckplatte und der Halterung vorgesehen ist.

Außerdem ist es vorteilhaft, dass die Abdeckplatte eine tassenförmige Vertiefung mit einer planen Anlagefläche aufweist, die gegen die Oberfläche der Halterung anpressbar ist. Hierdurch kann eine ebene Oberfläche erzielt und vermieden werden, dass die Festklemmelemente an der Oberfläche der Abdeckplatte hervorstehen und durch Aufschlag von Steinen oder durch Verschmutzung beschädigt werden.

Vorteilhaft ist es auch, dass das Festklemmelement aus elastomerem Material besteht und die Rohrleitungen formschlüssig umschließt.

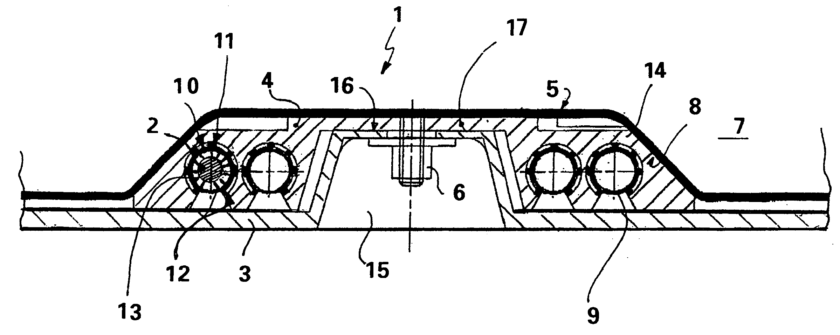

Weitere Vorteile und Einzelheiten der Erfindung sind in den Patentansprüchen und in der Beschreibung erläutert und in der Figur dargestellt.

In der Zeichnung ist eine schematische Darstellung einer Vorrichtung 1 zur Befestigung von Rohrleitungen bzw. Kabeln, Kabelschläuchen und/oder kleinen Komponenten 2 gezeigt, die insbesondere bei Kraftfahrzeugen einsetzbar ist. Die Vorrichtung 1 zur Befestigung von Rohrleitungen bzw. Kabeln 2 oder anderen Komponenten besteht aus einer Abdeckplatte 3 und mindestens einer Halterung 4. Die Abdeckplatte 3 ist im Ausführungsbeispiel die Unterbodenverkleidung. Die Halterung 4 weist ein rechtes und linkes Tragteil 14 auf, die über einen Verbindungssteg 17 fest miteinander verbunden sind. Die an dem Verbindungssteg 17 angeschlossenen Tragteile 14 sind ein wenig abgewinkelt, so dass sie als Gesamt-Vorrichtung in eine in einem Karosserieteil 7 vorgesehene V-förmige oder anders ausgebildete Aussparung 8 eingesetzt und über ein Verbindungselement 6 mit einer Unterseite 5 des Karosserieteils 7 des Kraftfahrzeugs verbunden werden kann. Das Verbindungselement 6 kann eine Niete oder eine Schraubverbindung sein, die durch eine in der Abdeckplatte 3 und in der Halterung 4 vorgesehene, in der Zeichnung nicht dargestellte Öffnung hindurchgeführt und an der Unterseite des Karosserieteils 7 verschraubt oder vernietet wird. Die Halterung 4 ist der Außenkontur der im Karosserieteil 7 vorgesehenen Aussparung 8 angepasst.

Die Abdeckplatte 3 kann so ausgebildet sein, dass sie die gesamte nach unten gerichtete Öffnung der Aussparung 8 abdeckt und dadurch die Rohrleitungen bzw. Kabel 2 gegen Beschädigungen schützt.

Nach dem Ausführungsbeispiel besteht die Halterung 4 aus einem rechten und linken Tragteil 14, die an einem Verbindungssteg 17 angeordnet sind. Zwischen den beiden Tragteilen 14 ist das Verbindungselement 6 zum Anschluss der Abdeckplatte 3 und der Halterung 4 vorgesehen und, wie bereits erwähnt, am Karosserieteil 7 befestigt.

Die im Ausführungsbeispiel beschriebene Halterung 4 kann durch eine andere Halterung ersetzt werden, die aus einem elastomeren Werkstoff beispielsweise aus Gummi oder aus Kunststoff bestehen kann, wobei die Festklemmelemente 9 die Rohrleitungen 2 ohne Zwischenraum zwischen der Oberfläche der Festklemmelemente 9 und der Oberfläche der Rohrleitungen 2 formschlüssig umschließen.

In der Halterung 4 sind eine oder mehrere die Rohrleitungen bzw. Kabel 2 aufnehmende, flexibel ausgebildete Festklemmelemente bzw. Klipse 9 vorgesehen, die zur Aufnahme der Rohrleitungen, Kabel oder der Kabelschläuche und/oder kleinen Komponenten 2 nach einer Seite hin offen sind, so dass diese in den Festklemmelementen 9 aufgenommen und gesichert werden können.

Die Festklemmelemente 9 bestehen aus einem kreisbogenförmigen Segment 10, das über eine oder mehrere Stege 11 derart in der in der Halterung 4 vorgesehenen Aussparung 8 aufgenommen ist, dass zwischen dem Außenumfang des Segments 10 ein Luftspalt gebildet wird. Das Segment 10 weist an seiner Innenseite 12 eine oder mehrere Abstandsstege 13 auf, gegen die die Außenseite der Rohrleitungen bzw. des Kabels 2 anlegbar ist.

Die Abdeckplatte 3 weist eine tassenförmige Vertiefung 15 mit einer planen Anlagefläche 16 auf, die gegen die Oberfläche der Halterung 4 anpressbar ist.

## Patentansprüche

1. Vorrichtung (1) zur Befestigung von Leitungen und/oder Rohrleitungen, Kabeln, Kabelschläuchen und/oder kleinen Komponenten (2), die mit Hilfe mindestens einer Abdeckplatte (3) an der Unterseite (5) eines Kraftfahrzeugs befestigt ist,
**dadurch gekennzeichnet,**
**dass** zwischen der Unterseite (5) des Kraftfahrzeugs und der Abdeckplatte (3) mindestens eine Halterung (4) zur Aufnahme der Rohrleitungen, Kabel, Kabelschläuche und/oder kleinen Komponenten (2) an einem Karosserieteil (7) eines Kraftfahrzeugs angeschlossen ist, wobei die Abdeckplatte (3) und die Halterung (4) mit Hilfe eines Befestigungselements am Karosserieteil (7) angebracht ist.

2. Vorrichtung nach Anspruch 1,
**dadurch gekennzeichnet,**
**dass** an der Unterseite (5) des Kraftfahrzeugs eine oder mehrere Halterungen (4) vorgesehen sind, die mit Hilfe der Abdeckplatte (3) abgedeckt sind.

3. Vorrichtung nach Anspruch 1 oder 2,
**dadurch gekennzeichnet,**
**dass** die Abdeckplatte (3) und die Halterung (4) mit Hilfe eines einzigen Verbindungselements (6) gemeinsam an einem Karosserieteil (7) des Kraftfahrzeugs befestigbar sind.

4. Vorrichtung nach einem der vorhergehenden Ansprüche,
**dadurch gekennzeichnet,**
**dass** die Halterung (4) der Außenkontur einer im Karosserieteil (7) vorgesehenen Aussparung (8) angepasst ist.

5. Vorrichtung nach einem der vorhergehenden Ansprüche,
**dadurch gekennzeichnet,**
**dass** die Abdeckplatte (3) die gesamte die Halterung (4) aufnehmende Aussparung (8) abdeckt.

6. Vorrichtung nach einem der vorhergehenden Ansprüche,
**dadurch gekennzeichnet,**
**dass** in der Halterung (4) eine oder mehrere die Rohrleitungen (2) aufnehmende flexibel ausgebildete Festklemmelemente (9) vorgesehen sind, die zur Aufnahme der Rohrleitung bzw. des Kabels (2) nach einer Seite hin offen sind.

7. Vorrichtung nach einem der vorhergehenden Ansprüche,
**dadurch gekennzeichnet,**
**dass** die Festklemmelemente (9) aus einem kreisbogenförmigen Segment (10) bestehen, das über eine oder mehrere Stege (11) derart in der in der Halterung (4) vorgesehenen Aussparung (8) aufgenommen ist, dass zwischen dem Au-ßenumfang des Segments (10) und der Halterung (4) ein Luftspalt gebildet wird.

8. Vorrichtung nach einem der vorhergehenden Ansprüche,
**dadurch gekennzeichnet,**
**dass** das Segment (10) an seiner Innenseite (12) eine oder mehrere Abstandsstege (13) aufweist, gegen die die Außenseite der Rohrleitungen oder des Kabels (2) anlegbar ist.

9. Vorrichtung nach einem der vorhergehenden Ansprüche,
**dadurch gekennzeichnet,**
**dass** die Halterung (4) ein rechtes und linkes Tragteil (14) mit einem Verbindungssteg (17) aufweist, wobei zwischen den beiden Tragteilen (14) das Verbindungselement (6) zum Anschluss der Abdeckplatte (3) und der Halterung (4) vorgesehen ist.

10. Vorrichtung nach einem der vorhergehenden Ansprüche,
**dadurch gekennzeichnet,**
**dass** die Abdeckplatte (3) eine tassenförmige Vertiefung (15) mit einer planen Anlagefläche (16) aufweist, die gegen die Oberfläche der Halterung (4) anpressbar ist.

11. Vorrichtung nach einem der vorhergehenden Ansprüche,
**dadurch gekennzeichnet,**
**dass** das Festklemmelement (9) aus elastomerem Material besteht und die Rohrleitungen (2)formschlüssig umschließt.
